# EUROPÄISCHE PATENTSCHRIFT

(11) **EP 1 567 802 B1**
(45) Veröffentlichungstag und Bekanntmachung des Hinweises auf die Patenterteilung: **05.07.2006**
(21) Anmeldenummer: 03812135.6
(22) Anmeldetag: 22.08.2003
(51) Int. Cl.: F16N 25/02

(54) **PROGRESSIVVERTEILER MIT VERSCHIEBBAREN KOLBEN**
PROGRESSIVE DISTRIBUTOR COMPRISING DISPLACEABLE PISTONS
DISTRIBUTEUR PROGRESSIF A PISTONS MOBILES

(30) Priorität: 02.12.2002 DE 20218625 U
(43) Veröffentlichungstag der Anmeldung: 31.08.2005
(73) Patentinhaber: Lincoln GmbH & Co. KG, 69190 Walldorf (DE)
(72) Erfinder: PALUNCIC, Zdravko, 67067 Ludwigshafen (DE)
(74) Vertreter: KEIL & SCHAAFHAUSEN Patentanwälte
(86) Internationale Anmeldenummer: PCT/EP2003/009337
(87) Internationale Veröffentlichungsnummer: WO 2004/051136

(56) Entgegenhaltungen:
- EP-A- 0 152 901
- US-A- 2 146 424
- US-A- 3 086 614
- US-A- 3 129 787
- US-A- 3 459 278
- US-A- 4 364 452

## Beschreibung

Die Erfindung bezieht sich auf einen Progressivverteiler mit drei oder mehr je in einer Gehäusebohrung eines Verteilergehäuses verschiebbaren Steuerkolben, welcher jeweils unter Abgabe einer bestimmten Schmierstoffmenge über einen je stirnseitigen Auslass, welcher über je einen von zwei Ringnuten der Gehäusebohrung des jeweils vorhergehenden Steuerkolbens geführt ist, von dem über einen Gehäuseeinlass unter Druck zugeführten Schmierstoff abwechselnd in ihre beiden Endstellungen in der zugehörigen Gehäusebohrung gedrückt werden, wobei die Steuerkolben aufgrund der je zwei Ringnuten aufeinanderfolgend von dem Schmierstoff so gesteuert werden, dass der nächste Steuerkolben erst dann von dem Schmierstoff verschoben werden kann, wenn die Kolbenbewegung des vorangegangenen Steuerkolbens ganz oder nahezu abgeschlossen ist, wobei die Gehäusebohrungen über eine Mittelbohrung mit dem Einlass verbunden sind, wobei je ein Kanal eine Ringnut der jeweiligen Gehäusebohrung des vorhergehenden Steuerkolbens mit der Stirnseite der jeweiligen Gehäusebohrung des nachfolgenden Steuerkolbens verbindet, und zwar bis auf einen Steuerkolben bei auf der gleichen Seite liegender Ringnut und Stirnseite, bei dem einen Steuerkolben jedoch bei auf unterschiedlicher Seite liegender Ringnut und Stirnseite.

Ein derartiger Progressivverteiler ist aus der DE 34 05 690 C2 bekannt. Um einen solchen Progressivverteiler mit zusätzlichen Funktionen auszustatten und dadurch neuartige Anwendungen einsetzbar zu machen, insbesondere auch dort, wo Maschinen mit sehr geringen Mengen geschmiert werden sollen oder wo einzelne Schmierstellen häufig, andere aber bspw. nur täglich, wöchentlich oder monatlich zu versorgen sind, ist vorgesehen, dass jeweils ein Verbindungskanal die jeweiligen Stirnseiten wenigstens einer Gehäusebohrung, jedoch nicht aller Gehäusebohrungen, mit jeweils einer Stirnseite der Bohrung eines Zusatzzylinders verbunden, in welchem ein Zusatzkolben zwischen zwei Anschlägen von dem Schmierstoff hin- und her bewegbar angeordnet ist, wobei wenigstens ein Kolben gegen jeweils einen Auslassdruck fördern muss, der höher ist als der Auslassdruck, gegen welchen der Zusatzkolben arbeitet, und wobei für die Erzeugung des höheren Auslassdruckes den entsprechenden Auslässen ein Überströmventil oder ein Rückschlagventil mit Gegendruck zugeordnet ist. Bei einer alternativen Lösung kann statt der Anordnung der Überströmventile oder Rückschlagventile mit Gegendruck der Zusatzkolben wenigstens eine Umfangsnut aufweisen, welche nur in den beiden Endstellungen des Zusatzkolbens einen Auslass eines Kolbens freigibt. Bei derartigen Progressivverteilern wird, wenn der jeweilige Kolben, an dessen Gehäusebohrung der Zusatzzylinder angeschlossen ist, durch Beaufschlagung der einen Stirnfläche von einer Seite zur anderen geschoben wird, aus dem diesem Kolben zugeordneten Auslass nicht nur die von der gegenüberliegenden Stirnfläche dieses Kolbens verdrängte Schmierstoffmenge abgegeben, sondern auch noch durch Verschieben des Zusatzkolbens von seiner einen Endlage in die gegenüberliegende Endlage eine solche zusätzliche Schmierstoffmenge, welche dem freien Volumen des Zusatzzylinders entspricht. Bei der einen Lösung setzt der Verschiebezylinder der einzelnen Kolben so lange aus, bis der Gesamtinhalt des Zusatzzylinders entleert ist, da wenigstens einer dieser weiteren Kolben sich gegen einen Auslassdruck verschieben müsste, der höher ist, als der Auslassdruck, der dem Zusatzkolben unter Berücksichtigung der Reibungsverluste zu überwinden hat. Bei der anderen Lösung sperrt der Zusatzkolben den erforderlichen Auslass für die Fortsetzung des Verschiebezyklus der Kolben so lange, bis der Zusatzkolben von seiner einen Endlage in die andere Endlage verschoben worden ist, und seine Umfangsnut den erforderlichen Auslass für die Fortsetzung des Verschiebezyklus freigibt. Die erste Lösungsvariante hat den Vorteil, dass der Kolben hubkontinuierlich veränderbar ist. Die zweite Lösungsvariante hat den Vorteil, dass sie bei allen Druckverhältnissen funktionssicher arbeitet, da es auf einen erhöhten Gegendruck an wenigstens zwei gegenüberliegenden Auslässen eines Kolbens nicht ankommt. In beiden Fällen wirkt der Progressivverteiler mit dem einen Zusatzzylinder als hydraulisches Zeitglied, wobei die Zeitverzögerung für die Fortsetzung des Verschiebezyklus durch das Volumen des Zusatzzylinders bestimmbar oder bestimmt ist.

Aufgabe der vorliegenden Erfindung ist es, einen Progressivverteiler vorzuschlagen, aus dessen sämtlichen oder wenigstens mehreren Auslässen bei konstruktiv geringem Aufwand und sicherer Bedienung unterschiedliche Schmierstoffvolumina abgegeben werden können.

Diese Aufgabe wird bei einem Progressivverteiler der eingangs genannten Art bspw. dadurch gelöst, dass jeweils ein Verbindungskanal die jeweiligen Stirnseiten aller oder wenigstens mehrerer Gehäusebohrungen mit einer Stirnseite der jeweils zugeordneten Bohrung eines zwischen zwei Anschlägen, von welchen wenigstens eine axial verstellbar und/oder austauschbar ist, von dem Schmierstoff hin und her bewegbaren Dosierkolbens miteinander verbindet und dass der Verschiebewiderstand des jeweiligen einem Steuerkolben zugeordneten Dosierkolbens kleiner ist als der Verschiebewiderstand des jeweils nachfolgenden Steuerkolbens.

Vorteilhafterweise ist auch der Verschiebewiderstand des jeweiligen Dosierkolbens kleiner als der Verschiebewiderstand des ihm zugeordneten Steuerkolbens.

Eine Bestimmungsgröße für den Verschiebewiderstand des Dosierkolbens ist dessen mit Schmierstoffdruck beaufschlagte Stirnfläche und demzufolge auch der Querschnitt der Bohrungen, in welchen die Dosierkolben verschieblich sind. Insbesondere kann aber der Verschiebewiderstand des jeweiligen Dosierkolbens mittels O-Ring-Anordnung und/oder Einpassung in seine Bohrungen eingestellt werden.

Eine konstruktiv günstige Anordnung des erfundenen Progressivverteilers erhält man dann, wenn der jeweilige Dosierkolben zu dem ihm zugeordneten Steuerkolben parallel und auf der dem Einlass zugeordneten Seite des Verteilergehäuses liegt, und zwar bis auf einen Steuerkolben, welcher dem Einlass am nächsten und dessen Dosierkolben am weitesten entfernt von dem Einlass liegt.

Für die einfache Bedienbarkeit ist es von Vorteil, wenn die Anschläge an einer Stirnseite des Verteilergehäuses unmittelbar benachbart den Ausgangsöffnungen des zugehörigen Auslasses angeordnet sind.

Dabei ist insbesondere vorgesehen, dass in einander gegenüberliegenden Stirnseiten des Verteilergehäuses jeweils jeder zweite Auslass, jeder zweite zugeordnete Anschlag und jede zugeordnete Gehäusebohrung für die Steuerkolben jeweils in einer von drei Reihen derart angeordnet sind, dass die einander zugeordneten Verteilergehäuse, Auslässe und Gehäusebohrungen für die Steuerkolben unmittelbar benachbart zueinander liegen.

Um unerwünschte Rückschlüsse und/oder Verschmutzungen des Progressivverteilers zu vermeiden, kann den Ausgangsöffnungen der Auslässe jeweils ein Rückschlagventil zugeordnet sein.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: schematisch geschnitten eine Ausführungsform eines die Erfindung verwirklichenden Progressivverteilers, und
- Fig. 2: schematisch die Ansicht einer Stirnseite des Verteilergehäuses.

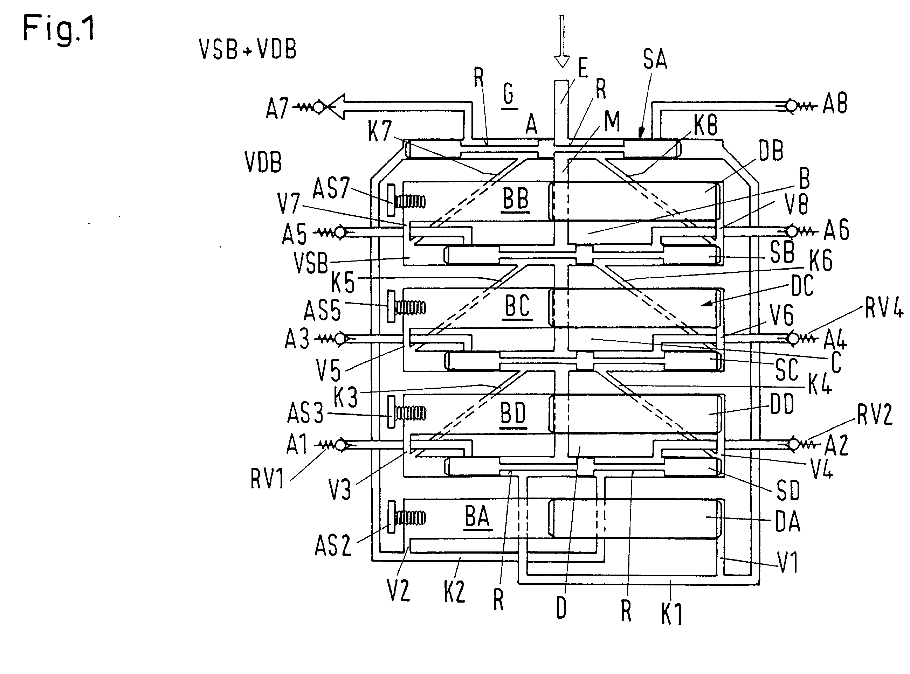

Das in Fig. 1 dargestellte Ausführungsbeispiel bezieht sich auf einen Progressivverteiler mit einem Verteilergehäuse G, in welchem in vier Gehäusebohrungen A bis D vier Steuerkolben SA bis SD durch den über den Einlass E, z.B. von einer (nicht dargestellten) Pumpe, einer Mittelbohrung M zugeführten Schmierstoff hin- und her bewegbar sind. Den Gehäusebohrungen A bis D bzw. den Steuerkolben SA bis SD sind acht (auf jeder Seite vier) Auslässe A1 bis A8 zugeordnet. Jeder Steuerkolben SA bis SD weist zwei Ringnuten R im axialen Abstand voneinander auf. Die jeweiligen Stirnseiten der Gehäusebohrungen A bis D stehen über Kanäle K1 bis K8 mit der Ringnut R der entsprechenden Steuerkolben SA bis SD der jeweils vorhergehenden Gehäusebohrung A bis D in Strömungsverbindung. Für die obersten drei Gehäusebohrungen A bis C liegen dabei der Bereich der Ringnut R und die Stirnseite der nachfolgenden Gehäusebohrung D auf der gleichen Seite der (senkrecht zur Zeichnungsebene stehenden, von oben nach unten verlaufenden) Mittellängsebene. Die Gehäusebohrung D des untersten Steuerkolbens SD steht über die Kanäle K1 und K2 im Bereich der Ringnut R jedoch jeweils mit der bezüglich der genannten Mittellängsebene gegenüberliegenden Stirnseite der Gehäusebohrung A des obersten Steuerkolbens SA in Strömungsverbindung. Die Auslässe A1 bis A8 sind jeweils über die Gehäusebohrung A bis D und die Ringnut R des jeweils vorhergehenden Steuerkolbens SA bis SD geführt. Die Gehäusebohrungen A bis D stehen alle über die Mittelbohrung M mit dem Einlass E in Verbindung. Auf diese Weise wird erreicht, dass die Steuerkolben SA bis SD unter Einwirkung des zugeführten Schmierstoffes auf der einen Stirnseite und unter Abgabe eines bestimmten Schmierstoffvolumens VSA bis VSD über einen der Auslässe A1 bis A8 auf der anderen Seite abwechselnd in die beiden Endstellungen in ihrer Gehäusebohrung A bis D gedrückt werden. Der jeweils nächste Steuerkolben SA bis SD kann erst dann von dem nachgedrückten Schmierstoff verschoben werden, wenn die Kolbenbewegung des vorangegangenen Steuerkolbens SA bis SD ganz oder nahezu abgeschlossen ist.

Jeweils ein Verbindungskanal V1 bis V8 verbindet die jeweiligen Stirnseiten der Gehäusebohrungen A bis D mit einer Stirnseite der jeweils zugeordneten Bohrung BA bis BD mit zwei endseitigen Anschlägen AS1 bis AS8, von welchen wenigstens jeweils eine axial verstellbar und/oder austauschbar ist. In den Bohrungen BA bis BD ist jeweils einer der Dosierkolben BA bis BD von dem Schmierstoff zwischen den Anschlägen AS1 bis AS8 hin- und her bewegbar. Dabei ist der Verschiebewiderstand des jeweiligen einem Steuerkolben SA bis SD zugeordneten Dosierkolbens DA bis DD kleiner als der Verschiebewiderstand des jeweils nachfolgenden Steuerkolbens SA bis SD. Ferner ist der Verschiebewiderstand des jeweiligen Dosierkolbens DA bis DD kleiner als der Verschiebewiderstand des ihm zugeordneten Steuerkolbens SA bis SD. Der Verschiebewiderstand des jeweiligen Dosierkolbens DA bis DD ist in dem dargestellten Fall mittels Einpassung in die zugehörige Bohrung BA bis BD vorgenommen, wobei der jeweilige Dosierkolben DA bis DD eine größere stirnseitige Wirkfläche hat als der jeweils zugeordnete Steuerkolben SA bis SD.

Der Verschiebewiderstand kann auch mittels O-Ring-Anordnung an dem jeweiligen Dosierkolben DA bis DD eingestellt sein.

In dem dargestellten Ausführungsbeispiel ist der jeweilige Dosierkolben DA bis DD zu dem ihm zugeordneten Steuerkolben SA bis SD achsparallel und auf der dem Einlass E zugeordneten Seite des Verteilergehäuses vorgesehen, und zwar bis auf einen Steuerkolben SA, welcher dem Einlass E am nächsten liegen und dessen Dosierkolben DA am weitesten entfernt von dem Einlass E.

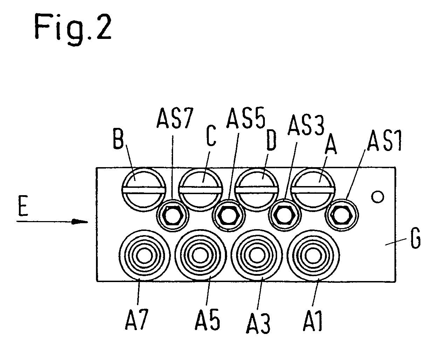

Wie aus Fig. 2 ersichtlich sind in einander gegenüberliegenden Stirnseiten des Verteilergehäuses G jeweils jeder zweite Auslass A1 bis A8, jeder zweite zugeordnete Anschlag AS1 bis AS8 und jede Öffnung der zugeordneten Gehäusebohrungen A bis D für die Steuerkolben SA bis SD jeweils in einer von drei Reihen derart angeordnet, dass die einander zugeordneten Auslässe A1 bis A8, Anschläge AS1 bis AS8 und Gehäusebohrungen A bis D für die Steuerkolben SA bis SD bedienungsfreundlich unmittelbar benachbart zueinander liegen.

Aus Fig. 1 ist ersichtlich, dass den Ausgangsöffnungen der Auslässe A1 bis A8 jeweils ein Rückschlagventil RV1 bis RV8 zugeordnet sein kann.

Wenn z.B. bei der in Fig. 1 dargestellten Position von Steuerkolben SA bis SD und Dosierkolben DA bis DD Schmierstoff über den Einlass E in die Mittelbohrung M eingeführt wird, gelangt dieser über die rechte Ringnut R des Steuerkolbens SA und den Kanal K8 auf die rechte Stirnfläche des Steuerkolbens SB und über den Verbindungskanal V8 auf die rechte Stirnfläche des Dosierkolbens DB, welche demzufolge in ihren jeweiligen Bohrungen B bzw. BB nach links getrieben werden. Das jeweils verdrängte Schmierstoffvolumen VSB bzw. VDB wird aufgrund des Verbindungskanals V7 über den Kanal K7 und die linke Ringnut R des Steuerkolbens SA an dem Auslass A7 abgegeben. Es ist ersichtlich, dass das Schmierstoffvolumen VDB, welches von dem Dosierkolben DB verdrängt werden kann, durch die veränderbare axiale Lage des Anschlages AS7 bestimmt wird und daher variabel ist.

Wenn sowohl der Steuerkolben SB als auch der Dosierkolben DB weitest möglich nach links verschoben worden sind, wird über die entsprechende Ringnut des nächsten Steuerkolbens SB und den Kanal K6 das gleiche Spiel mit der Verschiebung des Steuerkolbens SC und des Dosierkolbens DC fortgesetzt etc.. Aufgrund der Vertauschung der Kanäle K1 und K2 zu den auf der jeweils gegenüberliegenden Seite liegenden Ringnut R des Steuerkolbens SD kehren sich die Bewegungen sämtlicher Kolben um, sobald alle Steuerkolben SA bis SD und Dosierkolben DA bis DD in der Zeichnung nach links verschoben worden sind, etc..

Es versteht sich, dass auch auf der in der Zeichnung jeweils rechten Seite der Bohrungen BA bis BD für die Dosierkolben DA bis DD ein verstellbarer Anschlag vorgesehen werden kann, um auch auf dieser Seite ein variables verdrängtes Schmierstoffvolumen vorzusehen.

### Bezugszeichenliste

- A bis D: Gehäusebohrungen für Steuerkolben SA bis SD
- A1 bis A 8: Auslässe
- AS1 bis AS8: Anschläge
- BA bis BD: Bohrungen der Dosierkolben DA bis DD
- DA bis DD: Dosierkolben
- E: Einlass
- G: Verteilergehäuse
- K1 bis K8: Kanäle
- M: Mittelbohrung
- R: Ringnuten
- RV1 bis RV8: Rückschlagventil
- SA bis SD: Steuerkolben
- V1 bis V8: Verbindungskanäle
- VDA bis VDD: Schmierstoffvolumen (Dosierkolben)
- VSA bis VSD: Schmierstoffvolumen (Steuerkolben)

## Patentansprüche

1. Progressivverteiler mit drei oder mehr je in einer Gehäusebohrung (A bis D) eines Verteilergehäuses (G) verschiebbaren Steuerkolben (SA bis SD), welche jeweils unter Abgabe einer bestimmten Schmierstoffmenge (VSA bis VSD) über einen je stirnseitigen Auslass (A1 bis A8), welcher über je einen von zwei Ringnuten (R) der Gehäusebohrung (A bis D) des jeweils vorhergehenden Steuerkolbens (SA bis SD) geführt ist, von dem über einen Gehäuseeinlass (E) unter Druck zugeführten Schmierstoff abwechselnd in ihre beiden Endstellung in der zugehörigen Gehäusebohrung (A bis D) gedrückt werden, wobei die Steuerkolben (SA bis SD) aufgrund der je zwei Ringnuten (R) aufeinander folgend von dem Schmierstoff so gesteuert werden, dass der nächste Steuerkolben (SA bis SD) erst dann von dem Schmierstoff verschoben werden kann, wenn die Kolbenbewegung des vorangegangenen Steuerkolbens (SA bis SD) ganz oder nahezu abgeschlossen ist, wobei die Gehäusebohrungen (A bis D) über eine Mittelbohrung (M) mit dem Einlass (E) verbunden sind, wobei je ein Kanal (K1 bis K8) eine Ringnut (R) der jeweiligen Gehäusebohrung (A bis D) des vorhergehenden Steuerkolbens (SA bis SD) mit der Stirnseite der jeweiligen Gehäusebohrung (A bis D) des nachfolgenden Steuerkolbens (SA bis SD) verbindet, und zwar bis auf einen Steuerkolben (SD) bei auf der gleichen Seite liegender Ringnut (R) und Stirnseite, bei dem einen Steuerkolben (SD) jedoch bei auf unterschiedlicher Seite liegender Ringnut (R) und Stirnseite, wobei jeweils ein Verbindungskanal (V1 bis V8) die jeweiligen Stirnseiten aller oder wenigstens mehrerer Gehäusebohrungen (A bis D) mit einer Stirnseite der jeweils zugeordneten Bohrung (BA bis BD) eines zwischen zwei Anschlägen (AS1 bis AS8), von welchen wenigstens einer axial verstellbar und/oder austauschbar ist, von dem Schmierstoff hin und her bewegbaren Dosierkolbens (DA bis DD) miteinander verbindet und wobei der Verschiebewiderstand des jeweiligen einem Steuerkolben (SA bis SD) zugeordneten Dosierkolbens (DA bis DD) kleiner ist als der Verschiebewiderstand des jeweils nachfolgenden Steuerkolbens (SA bis SD).

2. Progressivverteiler nach Anspruch 1, **dadurch gekennzeichnet, dass** der Verschiebewiderstand des jeweiligen Dosierkolbens (DA bis DD) kleiner ist als der Verschiebewiderstand des ihm zugeordneten Steuerkolbens (SA bis SD).

3. Progressivverteiler nach Anspruch 1 oder 2, **dadurch gekennzeichnet, dass** der Verschiebewiderstand des jeweiligen Dosierkolbens (DA bis DD) mittels O-Ring-Anordnung und/oder Einpassung eingestellt bzw. einstellbar ist.

4. Progressivverteiler nach Anspruch 1 bis 3, **dadurch gekennzeichnet, dass** der jeweilige Dosierkolben (DA bis DD) eine größere Wirkfläche hat als der jeweils zugeordnete Steuerkolben (SA bis SD).

5. Progressivverteiler nach einem der Ansprüche 1 bis 4, **dadurch gekennzeichnet, dass** der jeweilige Dosierkolben (DA bis DD) zu dem ihm zugeordneten Steuerkolben (SA bis SB) achsparallel und auf der dem Einlass (E) zugeordneten Seite des Verteilergehäuses (G) liegt, und zwar bis auf einen Steuerkolben (SA), welcher dem Einlass (E) am nächsten und dessen Dosierkolben (DA) am weitesten entfernt von dem Einlass (E) liegt.

6. Progressivverteiler nach einem der Ansprüche 1 bis 5, **dadurch gekennzeichnet, dass** die Anschläge (AS1 bis AS8) an einer Stirnseite des Verteilergehäuses (G) unmittelbar benachbart den Ausgangsöffnungen des zugehörigen Auslasses (A1 bis A8) angeordnet ist.

7. Progressivverteiler nach einem der Ansprüche 1 bis 7, **dadurch gekennzeichnet, dass** in einander gegenüberliegenden Stirnseiten des Verteilergehäuses (G) jeweils jeder zweite Auslass (A1 bis A8), jeder zweite zugeordnete Anschlag (AS1 bis AS8) und jede zugeordnete Gehäusebohrung (A bis D) für Steuerkolben (SA bis SD) jeweils in einer von drei Reihen derart angeordnet sind, dass die einander zugeordneten Auslässe (A1 bis A8), Anschläge (AS1 bis AS8) und Gehäusebohrungen (A bis D) für Steuerkolben (SA bis SD) unmittelbar benachbart zueinander liegen.

8. Progressivverteiler nach einem der Ansprüche 1 bis 7, **dadurch gekennzeichnet, dass** den Ausgangsöffnungen der Auslässe (A1 bis A8) jeweils ein Rückschlagventil (RV1 bis RV8) zugeordnet ist.

## Claims

1. A progressive distributor having three or more control pistons (SA to SD), each being displaceable in a respective housing bore (A to D) of a distributor housing (G) and each of which, upon delivery of a specific quantity of lubricant (VSA to VSD) through an outlet (A1 to A8) which is located on a respective front face and in each case leads from one of two annular grooves (R) of the housing bore (A to D) of the respective preceding control piston (SA to SD), is alternately pressed, by the lubricant supplied under pressure through a housing inlet (E), into its two end positions in the respective housing bore (A to D), said control pistons (SA to SD) being successively controlled by the lubricant, owing to the two annular grooves (R), in such a way that the next control piston (SA to SD) can only be displaced by the lubricant when displacement of the preceding control piston (SA to SD) has been completed or almost completed, and said housing bores (A to D) being connected to the inlet (E) via a central bore (M), a channel (K1 to K8) in each case connecting an annular groove (R) of the respective housing bore (A to D) of the preceding control piston (SA to SD) to the front end of the respective housing bore (A to D) of the following control piston (SA to SD), that is to say, except for in the case of one control piston (SD), with the annular groove (R) and the front end being located on the same side, but in the case of the one control piston (SD) with the annular groove (R) and the front end being located on different sides, and a respective connecting channel (V1 to V8) interconnecting the respective front ends of all or at least a number of housing bores (A to D) with a front end of the respective associated bore (BA to BD) of a dosing piston (DA to DD) which can be moved back and forth by the lubricant between two stops (AS1 to AS8), of which at least one is axially displaceable and/or exchangeable, and the resistance to displacement of the respective dosing piston (DA to DD) associated with a control piston (SA to SD) being less than the resistance to displacement of the respective following control piston (SA to SD).

2. A progressive distributor according to Claim 1, **characterized in that** the resistance to displacement of the respective dosing piston (DA to DD) is less than the resistance to displacement of the control piston (SA to SD) associated with it.

3. A progressive distributor according to Claim 1 or 2, **characterized in that** the resistance to displacement of the respective dosing piston (DA to DD) is or can be regulated by means of an O-ring arrangement and/or an adjustment in respect of its fitting.

4. A progressive distributor according to Claims 1 to 3, **characterized in that** the respective dosing piston (DA to DD) has a larger effective area than the respective associated control piston (SA to SD).

5. A progressive distributor according to one of Claims 1 to 4, **characterized in that** the respective dosing piston (DA to DD) lies axially parallel to its associated control piston (SA to SB) and is located on the side of the distributor housing (G) associated with the inlet (E), that is to say with the exception of one control piston (SA) which is located closest to the inlet (E) and whose dosing piston (DA) is located furthest away from said inlet (E).

6. A progressive distributor according to one of Claims 1 to 5, **characterized in that** the stops (AS1 to AS8) are disposed on a front face of the distributor housing (G) directly adjacent to the exit ports of the associated outlet (A1 to A8).

7. A progressive distributor according to one of Claims 1 to 7, **characterized in that**, in opposite front faces of the distributor housing (G), in each case every second outlet (A1 to A8), every second associated stop (AS1 to AS8) and every associated housing bore (A to D) for the control pistons (SA to SD) are respectively disposed in one of three rows in such a way that the related outlets (A1 to A8), stops (AS1 to AS8) and housing bores (A to D) for the control pistons (SA to SD) are located directly adjacent to one another.

8. A progressive distributor according to one of Claims 1 to 7, **characterized in that** a check valve (RV1 to RV8) is assigned to each of the exit ports of the outlets (A1 to A8).

## Revendications

1. Distributeur progressif avec trois ou plus pistons de commande (SA à SD) pouvant coulisser chacun dans un alésage de boîtier (A à D) d'un boîtier de distribution (G),
• lesquels pistons de commande sont poussés alternativement dans leurs deux positions finales respectives dans leur alésage de boîtier (A à D) respectif par le lubrifiant introduit sous pression par une entrée de boîtier (E) en distribuant à chaque fois une certaine quantité de lubrifiant (VSA à VSD) par une sortie (A1 à A8) située frontalement, chaque sortie étant guidée par une des deux gorges circulaires (R) de l'alésage de boîtier (A à D) du piston de commande (SA à SD) précédent,
• les pistons de commande (SA à SD) étant commandés, en raison de chacune des deux gorges annulaires (R) se faisant suite, par le lubrifiant de telle sorte que le piston de commande (SA à SD) suivant ne peut être déplacé par le lubrifiant que lorsque le mouvement de piston du piston de commande précédent (SA à SD) est entièrement ou pratiquement achevé,
• les alésages de boîtier (A à D) étant reliés par un alésage central (M) avec une entrée (E),
• un canal (K1 à K8) reliant à chaque fois une gorge annulaire (R) de l'alésage de boîtier (A à D) du piston de commande (SA à SD) précédent avec la face frontale de l'alésage de boîtier (A à D) du piston de commande (SA à SD) suivant qui se trouvent à l'exception d'un piston de commande (SA) avec une gorge annulaire (R) et une face frontale du même côté et pour l'un des piston (SD) avec la gorge annulaire (R) et la face frontale de côtés différents,
• un canal de liaison (V1 à V8) reliant à chaque fois les faces frontales correspondantes de tous les alésages de boîtier (A à D), ou du moins de certains, à une face frontale de l'alésage correspondant (BA à BD) d'un piston doseur (DA à DD) pouvant être déplacé dans un mouvement de va et vient par le lubrifiant entre deux butées (AS1 à AS8), dont une au moins peut être réglée axialement et / ou être échangée, et
• la résistance au coulissement de chaque piston doseur (DA à DD) correspondant à un piston de commande (SA à SD) est inférieure à la résistance de coulissement du piston de commande (SA à SD) suivant.

2. Distributeur progressif selon la revendication 1, **caractérisé en ce que** la résistance au coulissement de chaque piston doseur (DA à DD) est inférieure à la résistance au coulissement du piston de commande (SA à SD) qui lui est attribué.

3. Distributeur progressif selon la revendication 1 ou 2, **caractérisé en ce que** la résistance au coulissement de chaque piston doseur (DA à DD) est réglé ou peut être réglée au moyen d'un dispositif de joint rond et / ou d'une garniture.

4. Distributeur progressif selon la revendication 1 à 3, **caractérisé en ce que** chaque piston doseur (DA à DD) a une plus grande surface d'action que le piston de commande (SA à SD) qui lui est attribué.

5. Distributeur progressif selon l'une des revendications 1 à 4, **caractérisé en ce que** chaque piston doseur (DA à DD) a son axe parallèle à celui du piston de commande (SA à SD) qui lui est attribué et se situe sur le côté du boîtier de distributeur (G) correspondant à l'entrée (E), à l'exception d'un piston de commande (SA) qui est le plus proche de l'entrée (E) et dont le piston doseur (DA) est le plus éloigné de l'entrée (E).

6. Distributeur progressif selon l'une des revendications 1 à 5, **caractérisé en ce que** les butées (AS1 à AS8) sont disposés sur une face frontale du boîtier de distributeur (G) directement avoisinant les ouvertures de sortie des sorties (A1 à A8) correspondantes.

7. Distributeur progressif selon l'une des revendications 1 à 7, **caractérisé en ce que** dans les faces frontales opposées l'une à l'autre du boîtier de distributeur (G) sont disposés à chaque fois une sortie (A1 à A8) sur deux, une butée (AS1 à AS8) sur deux et les alésages de boîtier correspondants (A à D) pour les pistons de commande (SA à SD), à chaque fois disposés dans une de trois rangées de telle sorte que les sorties (A1 à A8), les butées (AS1 à AS8) et les alésages de boîtier (A à D) pour les pistons de commande (SA à SD) attribués les uns aux autres soient situés directement avoisinants les uns des autres.

8. Distributeur progressif selon l'une des revendications 1 à 7, **caractérisé en ce que** les ouvertures de sortie des sorties (A1 à A8) sont munies chacune d'un clapet antiretour (RV1 à RV8).
